(19) **Europäisches Patentamt**

**European Patent Office**

**Office européen des brevets**

(11) Publication number: **0 433 069 A2**

(12) **EUROPEAN PATENT APPLICATION**

(21) Application number: **90313584.6**

(22) Date of filing: **13.12.90**

(51) Int. Cl.5: **C08G 18/10, C08G 18/24, C08G 18/69, C08K 5/02, C09K 3/10**

(30) Priority: **13.12.89 GB 8928158**

(43) Date of publication of application:
**19.06.91 Bulletin 91/25**

(84) Designated Contracting States:
**DE ES FR GB IT SE**

(71) Applicant: **BOSTIK LIMITED**
**Ulverscroft Works Ulverscroft Road**
**Leicester LE4 6BW(GB)**

(84) **GB**

Applicant: **Bostik GmbH**
**Gattenhöferweg 36**
**W-6370 Oberursel(DE)**

(84) **DE IT**

Applicant: **BOSTIK FRANCE SA**
**RN 19**
**F-77170 Coubert(FR)**

(84) **ES FR**

Applicant: **BOSTIK AB**
**Strandbadsvaegen**
**S-25229 Helsingborg(SE)**

(84) **SE**

(72) Inventor: **Gilch, Heinz Gerhard**
**Hölderlinweg 17a**
**W-6380 Bad Homburg(DE)**
Inventor: **Reichardt, Rudiger**
**Saarlandstrasse 27**
**W-2000 Hamburg 60(DE)**

(74) Representative: **Harrison, Gordon Donald et al**
**FORRESTER & BOEHMERT**
**Widenmayerstrasse 4/I**
**W-8000 München 22(DE)**

(54) **Chemically-curing two-part polyurethane composition.**

(57) A chemically-curing, two-part polyurethane composition for use as an adhesive/sealant in double glazing comprising Part A comprising a prepolymer based on hydroxyl-terminated polybutadienne and Part B comprising polyisocyanates wherein, to enhance resistance to argon permeation, at least Part A and optionally Part B includes a plasticiser comprising a halogenated hydrocarbon, preferably a chlorinated paraffin, and wherein the catalyst is a tin-based catalyst.

## "CHEMICALLY-CURING TWO-PART POLYURETHANE COMPOSITION"

Description of the invention

The present invention relates to a chemically-curing, two-part polyurethane composition particularly for use as an adhesive/sealant in double-glazing (insulating glass) applications.

Double-glazing units usually comprise a pair of translucent or transparent sheets held in spaced-apart relationship by spacer elements located between the sheets, usually around the edges. The edges of the sheets are sealed by an adhesive/sealant composition which usually covers the spacer elements and serves to seal the space between the pair of sheets. To achieve satisfactory performance for such units, the adhesive/sealant must possess good adhesion to glass and also preserve the nature of the inter-sheet space. Moisture must be rigorously excluded from the space, and so it is necessary for the sealant to resist moisture vapour transition. One of the recent developments in the field of insulating glass is the gas-filled unit showing a lower heat and/or sound transmission rate. To maintain these properties over a long period, the sealant must have a low gas permeation rate, particularly for argon, which is commonly used.

Low gas permeation rates can in fact be achieved using sealants based on cured liquid polysulphides but these cannot reach the low levels of moisture vapour transition rate achieved by cured polyurethane sealants, based for example on hydroxyl-terminated polybutadiene and polyisocyanates.

It is an object of the present invention to produce a chemically-curing two-part polyurethane sealant composition having enhanced resistance to the permeation of non-polar gases such as argon whilst retaining low vapour transition rate of (polar) moisture vapour.

Such two-part polyurethane compositions comprise Part A which comprises a prepolymer based on hydroxyl-terminated polybutadiene and which, to form the composition, is mixed with Part B comprising polyisocyanates.

We have found that argon permeation of such polyurethane compositions may be greatly reduced by the incorporation of high-boiling halogenated plasticisers, particularly chlorinated paraffins.

According to the present invention, a chemically-curing, two-part, polyurethane composition comprising Part A comprising a catalyst and a prepolymer based on hydroxyl-terminated polybutadiene which, to form the composition, is mixed with Part B comprising polyisocyanates is characterised in that a plasticiser comprising a halogenated hydrocarbon, preferably chlorinated paraffin, is included in Part A, and that the catalyst is a tin-based catalyst.

Although it is surprising that relatively small amounts of halogenated hydrocarbon plasticiser are so effective, generally the higher the chlorine content of the plasticiser and the higher the proportion of halogenated hydrocarbon in the sealant, the more effective it is. As much chlorinated hydrocarbon plasticiser should therefore be used as can be incorporated into the sealant composition, with as high a chlorine content as possible.

The preferred chlorinated paraffins are straight chain chlorinated paraffins with from 10 to 20 carbon atoms and especially preferred are those with from 14 to 17 carbon atoms. However, commercially available mixtures of different chlorinated paraffins such as those sold under the names CERECLOR (ICI) and HORDAFLEX (Hoechst) can be used.

The halogen content of the halogenated plasticisers used in the invention can vary from 30wt% up to 70 wt% but the preferred range is 50wt% to 60wt%. The halogenated plasticisers are effective in the range of 3-50wt% of the sealant to reduce argon permeability while retaining the general properties required for double glazing sealants to meet the standards of performance now required from double-glazed units. In some cases, an improved sealant according to the present invention is further characterised in that halogenated hydrocarbon plasticiser is included in Part B in addition to its inclusion in Part A.

Incorporation of the halogenated hydrocarbon plasticiser in Part A rather than, or in addition to, its incorporation in Part B is desirable because Part A forms the major proportion of the final mix of the sealant and thus a high proportion of halogenated plasticiser in the cured sealant can be obtained and hence an enhanced effect on the reduction of argon permeation. However, it is not desirable in a Part A composition which incorporates a halogenated paraffin to use many of the known polyurethane catalysts, such as for example amines and metal catalysts using bismuth and mercury atoms because this results in a loss of storage stability of Part A as evidenced by the adhesion characteristics of the resulting mix. However we have, surprisingly, found that the use of a tin-based catalyst in Part A in such a case is possible without such a loss of stability so that the halogenated plasticiser content of the sealant can be maximised. The argon permeation rate of such a sealant is reduced to very much lower levels than hitherto achieved with polyurethane sealants whilst the excellent moisture-vapour transition properties of polyurethane materials is retained.

In order that the present invention may be better understood, preferred Examples will now be described in greater detail. All proportions in the Examples are Parts by weight.

|  | EXAMPLE 1 | COMPARATIVE EXAMPLE IV |
|---|---|---|
| **PART A:** | | |
| Chalk | 58 | 58 |
| Hydroxyl -terminated polybutadiene* | 22 | 22 |
| Plasticiser-DOP (di-octyl phthalate) | - | 20 |
| Plasticiser -chlorinated paraffin (chlorine 58 wt%) | 20 | - |
| DBTL (dibutyl tin laurate) | 0.002 | 0.002 |

*Poly bd R45 HT (ATO-Chem)

| **PART B:** | | |
|---|---|---|
| Liquid MDI -methylene diphenyl diisocyanate) | 50 | 50 |
| Fumed silica | 3.0 | 3.0 |
| Carbon black | 1 | 1 |
| Plasticiser-DOP (di-octyl phthalate) | 46 | 46 |

The mixing ratio used for testing all Examples and Comparative Examples was:

Part A: Part B    100: 7.6 by weight

For Comparative Example IV, argon permeation measured on a cured film of 2mm thickness was

$$14 \times 10^{-8}. \quad \frac{cm^2}{s.bar}$$

Whereas argon permeation of the Example 1 of the present invention was measured as

$$9.0 \times 10^{-8}. \quad \frac{cm^2}{s.bar.}$$

|  | EXAMPLE 2 | EXAMPLE 3 |
|---|---|---|
| **PART A:** | | |
| Chalk | 58 | 58 |
| Hydroxyl -terminated poly-butadiene*) | 22 | 22 |
| Plasticiser DOP | - | 10 |

4

| | | |
|---|---|---|
| Plasticiser -chlorinated paraffin (chlorine 58wt%) | 20 | 10 |
| DBTL | 0.002 | 0.002 |
| *)Poly bd R 45 HT (ATO-Chem) | | |

PART B:

| | | |
|---|---|---|
| Liquid MDI | 50 | 50 |
| Fumed silica | 3.0 | 3.0 |
| Carbon black | 1.0 | 1.0 |
| Plasticiser-DOP | - | 46 |
| Plasticiser -chlorinated paraffin (chlorine 58wt%) | 46 | - |
| Mixing ratio: Part A: Part B | 100:7.6 by weight | 100:7.6 by weight |

Argon permeation measurements of the Examples

Argon permeation:

$$8.0 \times 10^{-8} \; \frac{cm^2}{s.bar} \qquad\qquad 11.0 \times 10^{-8} \; \frac{cm^2}{s.bar}$$

The effect of catalyst variation on storage stability was demonstrated by a series of three further Comparative Examples in which the dibutyl tin laurate was substituted by three other catalysts commonly used in polyurethane compositions. These three Comparative Examples all showed an increase in reaching the tack-free state after storage for seven days at 70° C which demonstrated the loss of storage stability.

## EXAMPLES FOR STORAGE STABILITY

|  | Example 1 | Comparative V | Comparative VI | Comparative VII |
|---|---|---|---|---|
| **PART A:** | | | | |
| Chalk | 58 | 58 | 58 | 58 |
| Hydroxyl-terminated polybutadiene*) | 22 | 22 | 22 | 22 |
| Plasticiser chlorinated paraffin (chlorine 58wt%) | 20 | 20 | 20 | 20 |
| Catalyst | 0.002 | 0.05 | 0.09 | 0.05 |
|  | DBTL | Coscat 83 (Bi-octoate) | Texacat DPA (Amine) | Mercury-ester |

*)poly bd R 45 HT (ATO-Chem)

| **PART B:** | | | | |
|---|---|---|---|---|
| Liquid MDI methylene diphenyl diisocyanate | 50 | 50 | 50 | 50 |
| Fumed silica | 3.0 | 3.0 | 3.0 | 3.0 |
| Plasticiser-DOP | 46 | 46 | 46 | 46 |
| Carbon black | 1.0 | 1.0 | 1.0 | 1.0 |

Again, the mixing ratio used in these Comparative Examples was

Part A: Part B   100 : 7.6 by weight.

Tack-free time (PE-foil at room temperature):

| Pre-storage tack free time | 2hr 20m | 3hr | 1hr 50m | 2hr |
|---|---|---|---|---|

| Post-storage tack free time | 2hr 20m | 4hr 50m | 4hr | 6hr |

**Claims**

1. A chemically-curing, two-part polyurethane composition comprising Part A comprising a catalyst and a prepolymer based on hydroxyl-terminated polybutadiene and which, to form the composition, is mixed with Part B comprising polyisocyanates characterised in that a plasticiser comprising a halogenated hydrocarbon is included in Part A, and that the catalyst is a tin-based catalyst.

2. A two-part polyurethane composition according to Claim 1 further characterised in that halogenated hydrocarbon plasticiser is included in Part B in addition to its inclusion in Part A.

3. A two-part polyurethane composition according to Claim 1 or 2, wherein the plasticiser is a chlorinated paraffin.

4. A two-part polyurethane composition according to Claim 3 where the paraffin comprises one or more straight chain paraffins with a chain length of between 10 and 20 carbon atoms.

5. A two-part polyurethane compsotion according to Claim 4 wherein the paraffin comprises one or more straight chain paraffins with a chain length of between 14 and 17 carbon atoms.

6. A two-part polyurethane composition according to any one of the preceding claims wherein the halogen content of the plasticiser is from 30wt% to 70wt%.

7. A two-part polyurethane composition according to Claim 6 wherein the halogen content of the plasticiser is from 50wt% to 60 wt%.

8. A two-part polyurethane composition according to any one of the preceding containing from 3 - 50wt% of the plasticiser.

9. A prepolymer composition based on hydroxyl-terminated polybutadiene and a tin-based catalyst and for mixing with a polyisocyanate composition to form a polyurethane sealant, characterised by the incorporation of a halogenated hydrocarbon as a plasticiser.

10. A method of reducing the rate of argon permeation through a seal in an argon-filled double glazing unit characterised by the step of forming said seal from a chemically curing two-part polyurethane composition as characterised in any one of Claims 1 to 8.